# EUROPÄISCHE PATENTANMELDUNG

(11) **EP 1 334 875 A2**
(43) Veröffentlichungstag der Anmeldung: **13.08.2003**
(21) Anmeldenummer: 03001603.4
(22) Anmeldetag: 24.01.2003
(51) Int. Cl.: B60R 5/04

(54) **Antriebseinheit zur Bewegung einer Abdeckung in einem Kraftfahrzeug**

(30) Priorität: 31.01.2002 DE 10203744
(71) Anmelder: J. Stehle & Söhne Aktiengesellschaft, 73773 Aichwald (DE)
(72) Erfinder: Schmidt, Horst, 70469 Stuttgart (DE)
(74) Vertreter: KOHLER SCHMID + PARTNER

(57) **Zusammenfassung**

Eine Antriebseinheit (1) zur Bewegung einer Abdeckung (9) in einem Kraftfahrzeug umfasst einen Motor (2) zum Antrieb einer flexiblen Welle (3) und ein Getriebe (4) zur Umwandlung der Rotation der Welle (3) in eine Translation eines mit dem Mitnehmer verbundenen Antriebselements (7), wobei der Mitnehmer zur Auslenkung der Abdeckung (9) vorgesehen ist. Der zum Einbau benötigte Bauraum wurde möglichst klein gehalten. Der Antrieb ist so ausgestaltet, dass die Abdeckung (9) gleichmäßig ein- und ausgezogen wird. Die Montage ist schnell und einfach durchführbar.

## Beschreibung

Die vorliegende Erfindung betrifft eine Antriebseinheit zur Bewegung einer Abdeckung in einem Kraftfahrzeug. Die Abdeckung kann starr ausgebildet, zusammengefaltet oder bei einem Abdeckrollo aus- und einziehbar zusammengerollt sein.

Eine Abdeckung dient dazu, eine Einsehbarkeit des Kofferraums zu verhindern. Der Abdeckung kommt gleichzeitig auch eine Sicherheitsfunktion zu, weil die Abdeckung Gegenstände im Kofferraum bei einem Unfall zurückhalten kann.

Ein an sich bekanntes Abdeckrollo setzt sich im Wesentlichen aus einer Wickelwelle und einer Abdeckung zusammen, die auf der Wickelwelle mittels einer Federeinrichtung aufrollbar ist. Die Abdeckung kann aus- und eingezogen werden, um Teile eines Kofferraums, Laderaums oder sonstiger Bereiche eines Kraftfahrzeugs abzudecken.

Bei einem Kombi-Kraftfahrzeug ist keine permanente, ortsfest angeordnete starre Abdeckung oder Begrenzung des Kofferraums vorgesehen, damit der Kofferraum variabel gestaltet werden kann und eine optimale Beladung des Kraftfahrzeugs möglich wird.

In ähnlicher Weise werden auch bei Coupé-Cabriolets mit zusammenklappbarem Metalldach Abdeckungen eingesetzt. Das bei diesen Kraftfahrzeugen aus mehreren Teilen bestehende Fahrzeugdach kann automatisch zusammengefaltet und im Kofferraum verstaut werden. Vor dem Öffnen des Fahrzeugdaches muss eine Abdeckung ausgezogen werden, die den Kofferraum unterteilt. Die ausgezogene Abdeckung markiert den zur Verfügung stehenden Nutzraum des Kofferraums, damit der Anwender kein Gepäck in dem Bereich des Kofferraums platziert, den später das zusammengefaltete Fahrzeugdach benötigt. Es soll vermieden werden, dass das Fahrzeugdach beim Einfahren in den Kofferraum das Gepäck zerdrückt oder die Mechanik zur Bewegung des Fahrzeugdaches Schaden nimmt. Der ausgezogene Zustand der Abdeckung kann mit einem elektrischen Kontakt oder einem Sensor überwacht werden, um die motorgetriebene Dachöffnung erst bei ausgezogener Abdeckung einzuleiten.

Abdeckungen werden auch als Sonnenschutz an den Fenstern des Kraftfahrzeugs verwendet. Auch dort muss eine Abdeckung ein- und ausgezogen werden.

Die Erfindung ist daher im Kraftfahrzeug überall dort einsetzbar, wo eine Abdeckung definiert bewegt werden muss.

Manuell bedienbare Abdeckrollos sind aus praktischer Anschauung bei Kombi-Fahrzeugen bekannt. Ein motorgetriebenes Abdeckrollo ist beispielsweise durch die DE 195 39 848 A1 bekannt geworden.

Allgemein ergeben sich bei der Realisierung von elektromotorischen Antriebseinheiten von Abdeckungen in einem Kraftfahrzeug die folgenden technischen Probleme: Der zum Einbau benötigte Bauraum soll möglichst klein gehalten werden. Der Antrieb muss so ausgestaltet sein, dass die Abdeckung gleichmäßig bewegt bzw. ein- oder ausgezogen wird. Die Montage soll schnell und einfach durchgeführt werden können.

Diese Probleme werden durch eine Antriebseinheit gemäß Patentanspruch 1 mit einem Antriebsmotor, vorzugsweise einem Elektromotor, zum Antrieb einer flexiblen Welle und mit einem Getriebe zur Umwandlung der Rotation der Welle in eine Translation eines mit einem Mitnehmer verbundenen Antriebselementes gelöst, wobei der Mitnehmer zur Auslenkung der Abdeckung vorgesehen ist.

In bevorzugter Realisierung des Getriebes umfasst das Getriebe ein Abtriebsrad zum Eingriff in eine Außenprofilierung der flexiblen Welle.

Die Ausgestaltung von Antriebselementen zur Bewegung des Mitnehmers kann unterschiedlich durchgeführt werden. Zum einen können die Antriebselemente zur Hin- und Herbewegung des Mitnehmers durch einen flexiblen Schaft ausgebildet sein, dessen Oberfläche eine Profilierung aufweist, mit der das Abtriebsrad durch eine Verzahnung in Eingriff kommt. Zum anderen können die Antriebselemente zur Auslenkung des Mitnehmers durch einen umgelenkten Zahnriemen ausgebildet sein, der über das Abtriebsrad antreibbar ist. Weiterhin ist es auch denkbar, dass das Antriebselement zur Hin- und Herbewegung des Mitnehmers durch einen Seilzug ausgebildet ist, welcher durch das Abtriebsrad aufwickelbar und über den Mitnehmer mit der Abdeckung verbunden ist.

Es kann auch eine Rückholfeder vorgesehen sein, deren Federkraft dem Aufwickelvorgang des Seilzuges entgegenwirkt. Die Abdeckung wird bei nachlassendem Seilzug wieder automatisch in seine Ausgangstellung zurückgezogen. Die Rückholfeder kann je nach Anordnung des Seilzuges als Zugoder Druckfeder ausgebildet sein.

Der Mitnehmer ist erfindungsgemäß stets so mit dem Antriebselement verbunden, dass aus der Betätigung des Antriebselements eine Verschiebung des Mitnehmers resultiert. Der Mitnehmer kann in verschiedenen alternativen Formen ausgestaltet sein, nämlich als Absatz, als Haken, als Schieber, Anschlag usw.

Eine bevorzugte Verwendung der Antriebseinheit zur Bewegung der Abdeckung in einem Kraftfahrzeug ergibt sich bei einem Kombi-Kraftfahrzeug dadurch, dass der Elektromotor zum Antrieb der flexiblen Welle am Fahrzeugdach bzw. Fahrzeughimmel und jeweils ein Antriebselement, ein Mitnehmer und ein Getriebe an der oder in die D-Säule des Kraftfahrzeugs eingebaut werden, wobei das Getriebe zur Umwandlung der Rotation der Welle in eine Translation eines Antriebselements zur Auslenkung des Mitnehmers vorgesehen ist, der an einem Ende des Abdeckung angreift.

Die Erfindung wird anhand schematischer Darstellungen zu einem Ausführungsbeispiel in der nachfolgenden Beschreibung näher erläutert. Es zeigt:
- **Fig. 1**: eine perspektivische Ansicht wesentlicher Teile der Antriebseinheit eines Abdeckrollos;
- **Fig. 2**: eine perspektivische Ansicht eines Getriebes der Antriebseinheit;
- **Fig. 3**: eine perspektivische Ansicht des Getriebes nach Fig. 2 nach Abnahme des Gehäuses;
- **Fig. 4**: die Funktion der Antriebseinheit nach Fig. 1.

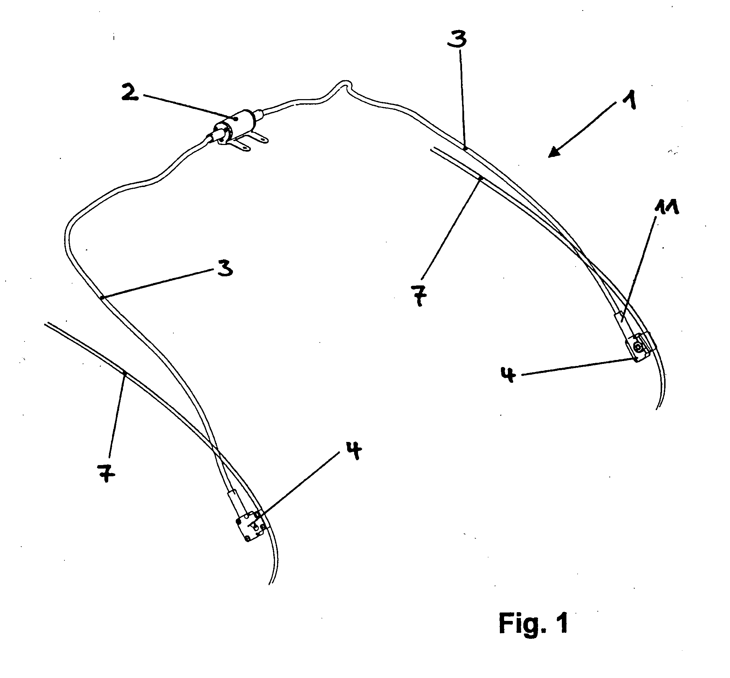

Aus der **Fig. 1** ist ersichtlich, dass eine Antriebseinheit **1** zur Bewegung einer in der Fig. 1 nicht gezeigten Abdeckung eines Abdeckrollos einen Elektromotor **2,** zwei flexible Wellen **3** (eine für die linke und eine rechte Seite der Abdeckung) und zwei jeweils einer Welle 3 zugeordnete Getriebe **4** umfasst.

Die Abdeckung ist auf einer Wickelwelle mittels einer Federeinrichtung aufrollbar und kann aus- und eingezogen werden. Die Federeinrichtung zieht die Abdeckung automatisch ein. Das Ausführungsbeispiel betrifft eine Antriebseinheit für eine Abdeckung eines Kofferraums eines Kombi-Kraftfahrzeugs.

Der Elektromotor 2 oder die Antriebseinheit 1 kann am Fahrzeugdach oder an anderen Karosseriebereichen des Fahrzeugs, wie beispielsweise im Bereich der D-Säule des Kombi-Kraftfahrzeugs, mittels Befestigungselementen 5 angebracht werden. Der Elektromotor 2 treibt die flexiblen Wellen 3 an.

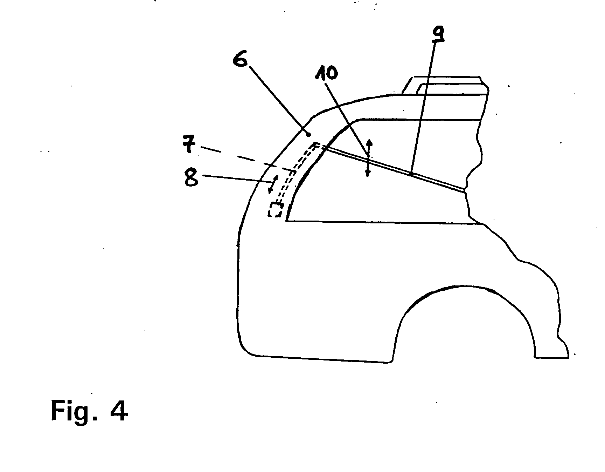

Die Funktion dieses Antriebs ist in der **Fig. 4** veranschaulicht. Die flexiblen, in der Fig. 4 nicht dargestellten Wellen aus Kunststoff oder Metall werden beidseitig jeweils in einer Nut in einer linken und in einer rechten D-Säule **6** eines Kraftfahrzeugs untergebracht. Die Rotation der flexiblen Wellen wird durch die Getriebe 4 in eine translatorische Bewegung beidseitig angeordneter Antriebselemente (Schaft **7**) umgesetzt, die ebenfalls in der D-Säule 6 in einer Führungsschiene beweglich angeordnet sind. Die Translation der Antriebselemente 7 verdeutlicht der Doppelpfeil **8**. Jede Bewegung eines Antriebselements 7 führt zur Auslenkung eines Mitnehmers. Der Mitnehmer kann fest an einem dem Getriebe 4 abgewandten Ende des Antriebselements 7 angebracht oder beweglich positioniert sein. Der Mitnehmer wirkt mit dem vorzugsweise verstärkten Ende einer Abdeckung **9** zusammen. Daher kann eine Translation der Antriebselemente 7 und damit des Mitnehmers ein Anheben der Abdeckung 9 in vertikaler Richtung **10** zum Fahrzeugdach hin bewirken.

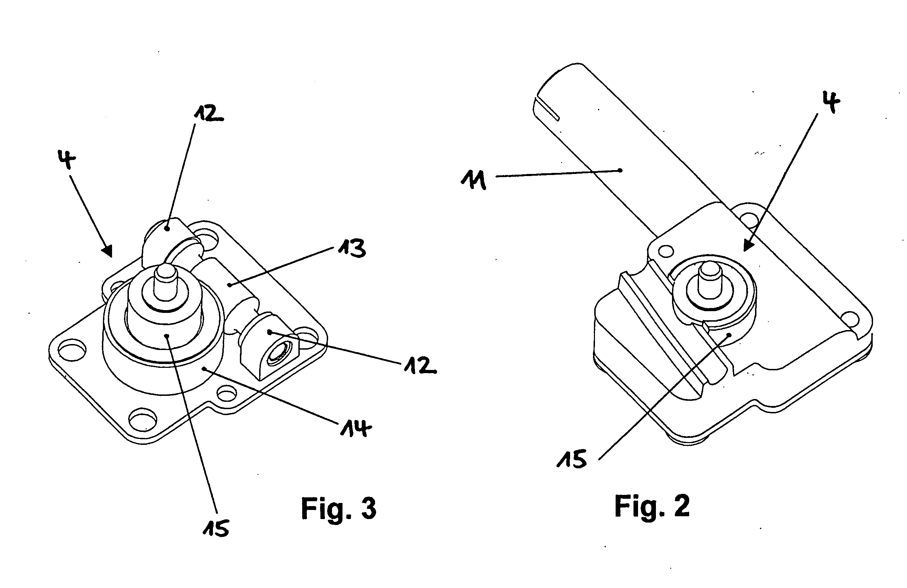

Die flexible Welle 3 ist einenends mit dem Elektromotor 2 und anderenends mit dem Getriebe 4 verbunden. Gemäß **Fign. 2** und **3** treibt die in eine Kupplung **11** eingeführte flexible Welle 3 zunächst eine in Lagerschalen **12** fixierte Schnecke **13** an, deren Bewegung wiederum über ein Schneckenrad **14** auf ein Abtriebsrad **15** übertragen wird. Die Oberfläche der durch einen Schaft ausgebildeten Antriebselemente 7 ist so gestaltet (Verzahnung zwischen Rillen oder Profilen des Antriebselements 7 mit Zähnen des Abtriebsrads 15), dass eine Umsetzung der Rotation des Abtriebsrads 15 in eine Translation des Antriebselements 7 stattfindet.

Die in den Figuren gezeigten mechanischen Komponenten des Antriebs können mit elektrischen Kontakten oder Sensoren so kombiniert werden, dass eine Überwachung des Zustands der Abdeckung 9 und beispielsweise ein automatisches Anheben der Abdeckung beim Öffnen der Heckklappe erfolgt. Es ist auch ein Betätigungsschalter im Innenraum des Kraftfahrzeugs denkbar, um die Abdeckung anzuheben.

Obgleich vielfältige Kombinationen und Betätigungsmechanismen möglich sind, wird folgende Anwendung die Regel sein: Zunächst ist die Abdeckung bis zu einem Rastpunkt im Bereich der D-Säule ausgezogen und eingehängt (Schließstellung). Wird nun die Heckklappe geöffnet, läuft der Mitnehmer nach oben und lenkt die Abdeckung in Richtung Fahrzeugdach aus der ursprünglichen horizontalen Abdeckebene aus. Die Abdeckung erreicht eine Ladestellung zum Be- oder Entladen des Kofferraums. Wird die Heckklappe anschließend wieder geschlossen, fährt das Antriebselement zurück, nimmt die Abdeckung mit und schiebt die Abdeckung in die Schließstellung zurück. Eine Endabschaltung schaltet den Antrieb ab. Es findet ein automatisches Anheben und Absenken beim Betätigen der Heckklappe statt.

### BEZUGSZEICHENLISTE

- 1: Antriebseinheit
- 2: Elektromotor
- 3: Welle
- 4: Getriebe
- 5: Befestigungselement
- 6: D-Säule
- 7: Antriebselement
- 8: Doppelpfeil
- 9: Abdeckung
- 10: Bewegungsrichtung
- 11: Kupplung
- 12: Lagerschale
- 13: Schnecke
- 14: Schneckenrad
- 15: Abtriebsrad

## Patentansprüche

1. Antriebseinheit (1) zu Bewegung einer Abdeckung (9) in einem Kraftfahrzeug mit einem Motor (2) zum Antrieb einer flexiblen Welle (3) und mit einem Getriebe (4) zur Umwandlung der Rotation der Welle (3) in eine Translation eines mit einem Mitnehmer verbundenen Antriebselements (7), wobei der Mitnehmer zur Auslenkung der Abdeckung (9) vorgesehen ist.

2. Antriebseinheit nach Anspruch 1, **dadurch gekennzeichnet, dass** das Getriebe (4) ein Abtriebsrad (15) zum Eingriff in eine Außenprofilierung der flexiblen Welle (3) umfasst.

3. Antriebseinheit nach Anspruch 1 oder 2, **dadurch gekennzeichnet, dass** das Antriebselement zur Auslenkung des Mitnehmers (7) durch einen flexiblen Schaft ausgebildet ist, dessen Oberfläche eine Profilierung aufweist, mit der das Abtriebsrad (15) in Eingriff kommt.

4. Antriebseinheit nach Anspruch 1 oder 2, **dadurch gekennzeichnet, dass** das Antriebselement zur Auslenkung des Mitnehmers durch einen Zahnriemen ausgebildet sind, der über das Abtriebsrad (15) antreibbar ist.

5. Antriebseinheit nach Anspruch 1 oder 2, **dadurch gekennzeichnet, dass** das Antriebselement zur Auslenkung des Mitnehmers durch einen Seilzug ausgebildet ist, welcher über den Mitnehmer mit der Abdeckung verbunden und durch das Abtriebsrad (15) gezogen wird .

6. Antriebseinheit nach Anspruch 5, **dadurch gekennzeichnet, dass** eine Rückholfeder vorgesehen ist, deren Federkraft im Falle eines Aufwickelvorgangs des Seilzuges dem Aufwickelvorgang entgegenwirkt.
